# EUROPEAN PATENT SPECIFICATION

(11) **EP 3 383 532 B1**
(45) Date of publication and mention of the grant of the patent: **17.12.2025**
(21) Application number: 16829432.0
(22) Date of filing: 25.11.2016
(51) Int. Cl.: B01J 37/00, B01J 23/40, B01J 23/74, B29C 51/00, B29C 51/26, B29C 51/44, H01M 4/88, H01M 4/90

(54) **METHOD FOR FAST SHAPING CARBON SUPPORTED METAL CATALYST POWDERS INTO FLEXIBLE PLATES VIA SUBSEQUENT COLD AND HOT COMPRESSION MOULDING**
VERFAHREN ZUR SCHNELLEN HERSTELLUNG VON FLEXIBLEN PLATTEN AUSGEHEND VON KOHLENSTOFF-GETRÄGERTEM KATALYSATOR-PULVER VIA EINER FOLGE VON KALT- UND HEISSPRESSE
PROCÉDURE DE PRÉPARATION RAPIDE DE PLAQUES FLEXIBLES À PARTIR DE CATALYSEURS SUR SUPPORTS CARBON POUDRES PAR UNE SÉQUENCE DE PRESSE À FROID ET À CHAUD

(30) Priority: 01.12.2015 TR 201515235
(43) Date of publication of application: 10.10.2018
(73) Proprietor: Tubitak, 06100 Ankara (TR)
(72) Inventor: SARIOGLAN, Serife, 41470 Kocaeli (TR); YÜZER, Hayrettin, 34736 Istanbul (TR); KORAL, Murat, 41470 Kocaeli (TR); KURULU, Osman, 41470 Kocaeli (TR); YILMAZ, Alaattin, 41470 Kocaeli (TR)
(86) International application number: PCT/IB2016/057132
(87) International publication number: WO 2017/093869

(56) References cited:
- US-A- 4 287 032
- US-A1- 2003 104 257
- US-A1- 2004 086 774

## Description

The proposed invention is related to a manufacturing method for fast shaping of carbon supported metal catalysts into plates with required elasticity and hardness, by means of cold and hot press techniques and by using polytetrafluoroethylene (PTFE) as binder.

Palladium as the metal and activated carbon as the support are used in the method of this invention. On the other hand, the method is not limited to activated carbon supported palladium catalyst. The catalytic metals, which the method of this invention can be applied to, include all elements taking place in the 8B column of periodic table selected from platinum, palladium, ruthenium, rhodium, nickel, iron. Catalyst supports to be used for saving the costs and increasing the number of active sites per unit volume are the materials chosen as to increase the active surface area and time to time to have additional catalytic effect. The catalyst supports based on carbon are activated carbon, char, silicon carbide and the like structures. In the method of this invention, all this carbon support materials are within the scope. Metal salts can be dispersed on support materials with different techniques (impregnation, ion exchange, precipitation etc.). This invention describes all steps of the method for fast shaping of carbon supported metal catalysts into plates, whatever being the catalyst preparation techniques in application.

Activated carbon used in the method of the invention is innocuous to human health and has high porosity and internal surface area. Activated carbon can attract molecules and ions in solution through its inner surfaces by means of its porous nature and therefore can be used a support material. Activated carbon like carbonaceous structures which can be pelletized by pressing after mixed up with a binder, can be easily used for gaseous phase applications on account of low pressure drop at the application medium, easy of transportation, high mechanical strength and low dusting characteristics.

In many previous works, different kinds of polymers were used as binder for pelletization of carbon. In patents with numbers CN103804826 and US2010279209, polyvinylidene fluoride (PVDF), phenolic and urethane resin polymers were seen to be used for pelleting the carbon. For example, phenolic and urethane resin polymers were mixed with activated carbon at an appropriate solution medium and then pressed into plates for the manufacture of bipolar plates which are used for fuel cell production. The application procedure for the manufacture of graphite-PTFE fuel cell electrode (US3935029) was the dispersion of powder form materials in an organic solvent, mixing, solvent removal and grinding, respectively. In patents with numbers WO2014148649 or JP2001058807, phenolic resin was used for the manufacture of flexible conductive carbon plates and electrodes. In the patent US4405544, polymeric compound as binder was polytetrafluoroethylene for the manufacture of cathode and active plates from carbon black. In the description of electrode active plate production in this patent (US4405544), polytetrafluoroethylene was added to the carbon black at an appropriate solvent medium and then the mixture was exposed to washing, drying and further mixing.

In the patent KR20120116256, a dispersion method in a hydrophilic solvent was applied for the manufacture of carbon-polytetrafluoroethylene electrode. In the patent work CN202412821, PTFE was used a binder for the production of carbon fiber plates. In that work (CN202412821), high temperature and high pressure were applied for the production. In the patent JP2009179792, filtrated carbon particles in wet form were dispersed in PTFE by means of heating at 330-360°C.

US 4 287 032 A discloses the preparation of an anode and a cathode by pressing a mixture of an electrocatalytic powder and Teflon.

The invention is described in the appended claims.

In the method of this invention, teflon (polytetrafluoroethylene-PTFE) in powder form is used as a binder to bring activated carbon containing precious metal into flexible and soft plate. The utilization from the binding properties of teflon occurs at its softening temperature, in other words, by applying pressing process at high temperatures.

Conventionally, the mixture in powder form is spread out in a thick metal mould and pressing procedure is applied at the softening temperature of the binder in order to have a plate with the requested dimensions. Long times are needed to be wait for heating up the mould to the teflon softening temperature and then cooling the mould after processing. Plate can be physically damaged if it is cracked during its displacement from the mould. In the developed method of this invention, spread material in the mould is exposed first to a shock cold press for a short period of time.

After this treatment, plate can easily be displaced from the mould without any physical damage. Before applying the hot pressing, both upper and lower planar sides of the plates are covered with aluminum folio at the plate dimensions. The required flexibility and hardness is gained to the plate covered with aluminum folio by applying hot pressing onto it for a short period of time. The advantage of the method in this invention is to press the mixture of carbon-metal-PTFE in a fast way and without giving any physical damage to the plates during moulding. By changing the pressing conditions of the method in this invention (the time for cold and hot press, applied pressing pressure and hot press temperature), this method can be applicable to different binders (not according to the presently claimed invention) and carbon powders and therefore the method is not limited to solely active carbon-PTFE plates. Another advantage of this method in this invention, the method of this invention does not involve any kind of energy intensive steps like solution of the polymer in a solvent, treatment of carbon powder with polymer solution and then drying the mixture with solvent removal. With the described method of the invention, carbon supported metal catalyst is mixed with the polymeric material, which is used as the binder, in dry condition and then pressed. With the described method of the invention, flexible catalyst plates can be manufactured both in a fast way and by consuming less energy.

The described procedure in the method of this invention; carbon supported metal catalyst in powder form and containing 0-30% metal (palladium, platinium) on weight basis (1), after adding powder teflon (2) reaching 40-80% teflon in the resulting mixture on weight basis, is placed in a blender (3). In the blender (3), the powder mixture of carbon supported metal catalyst-teflon is homogenized for 30-90 seconds in dry condition.

Homogenized mixture (3) is spread over stainless steel mould (4) fabricated according to the requested plate dimensions. The mixture spread over the mould (4) is pressed (5) at ambient temperature under 0.5-2.0 tons/inche² (7.722 - 30.888 MPa) pressure for 30-90 seconds. Plate is displaced from the mould deliberately after cold pressing (5). The cold pressed plate (5) is covered with aluminum folio from its upper and lower planar sides and then hot press is applied to this plate (5) at 280-350°C under 0.5-2.0 tons/inche² (7.722 - 30.888 MPa) pressure for 30-90 seconds. After hot pressing, flexible and undamaged plate (7) is uncovered from the folio. The flexible and soft catalyst plate becomes ready after the described procedure.

**Sample:** 3.8 gram of powder form activated carbon supported metal catalyst containing 30% palladium (1) is taken. 8.9 g of powder form teflon (2) is added onto it (1). So prepared activated carbon supported palladium catalyst-teflon mixture in dry form is placed to a mixer (blender) with the name and the model, M20 IKA WERKE. The rate of the mixer (blender) is adjusted to 10 000 rate (turns) per minute and the dry mixture in the blender chamber is further mixed for 60 seconds by running the blender (3) at this set value. The homogenized mixture prepared at step (3) is spread over the stainless steel mould in length of 92 mm, width of 160 mm and depth of 1 mm with care and in a way of not leaving any space at the topside. The homogenized mixture (3) spread over the mould (4) is pressed at ambient temperature under 1.0 tons/inche² (15.444 MPa) pressure for 60 seconds (5). The mixture (3), pressed at ambient temperature (5), is displaced from the mould with care. The plate prepared by cold pressing (5) is covered with aluminium folio from its upper and lower planar sides and then hot press is applied at 320°C under 1.0 tons/inche² (15.444 MPa) pressure for 40 seconds (6). After hot pressing (6), the catalyst plate with the required dimensions and flexibility is ready for use (7).

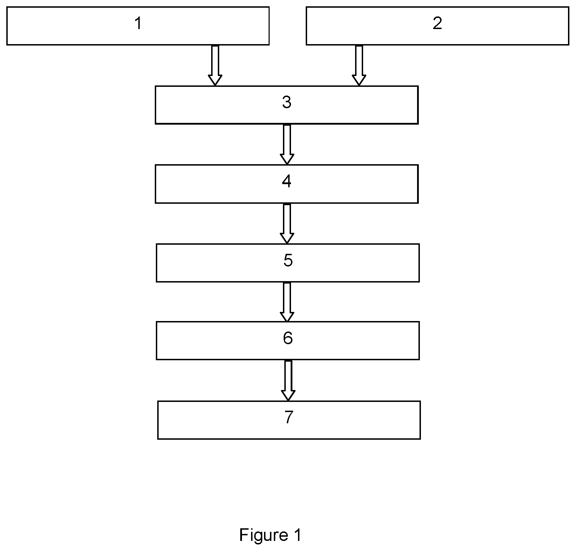

The schematic flow diagram for the method of this invention is given in Figure 1.

### Description of Drawings

Figure 1. The schematic flow diagram for the preparation method of carbon supported catalyst plate
1- Activated carbon powder containing metal
2- Binder (powder teflon)
3- Homogenization in dry condition at high turns per minute for 60 seconds
4- Spreading over a mould being at the requested dimensions
5- Pressing at ambient temperature for 60 seconds
6- Displacement from the mould and pressing at 320°C for 40 seconds after covering with aluminum folio
7- Catalyst plate ready for use

## Claims

1. A method of fast shaping carbon supported metal catalyst mixed with polytetrafluoroethylene (Teflon) used as polymeric binder into flexible plates through subsequent cold and hot press treatments of this catalyst-binder mixture, in which the method includes the following processing steps:
i. Mixing metal catalyst powder containing the carbon based support (1) with the polytetrafluoroethylene (Teflon) used as polymeric binder powder (2) in a dry condition, at a high mixing rate in the range between 5000 and 10000 rates (turns) per minute for between 30 and 90 seconds (3)
ii. Spreading over this homogenized powder mixture, prepared in step i), into the mould (4)
iii. Pressing (5) of the mould (4) under 0.5-2.0 tons/inche² (7.722 - 30.888 MPa) pressure, at ambient temperature for a short period of time of 30-90 seconds
iv. Displacement of cold pressed plate (5) from the mould, covering of the cold pressed plate (5) from both upper and lower planar sides with an aluminum folio and exposing it to high temperature pressing (6) under 0.5-2.0 tons/inche² (7.722 - 30.888 MPa) pressure, at 280-350°C for a short period of time of 30-90 seconds
v. After hot pressing (6), displacing the catalyst plate (7) from the aluminum folio.

2. A method according to Claim 1 wherein, the carbon based support is selected from activated carbon, char and silicon carbide.

3. A method according to Claim 1 wherein, the metal catalyst powder as an active metal on the carbon based support is selected from platinum, palladium ruthenium, rhodium, nickel, iron.

4. A method according to Claim 1 wherein, the weight percentage of metal in the metal catalyst powder containing the carbon based catalyst support is 0-30%.

5. A method according to Claim 1 wherein, the weight percentage of the polytetrafluoroethylene (Teflon) in the resulting mixture of step (i) is 40-80%.

## Patentansprüche

1. Verfahren zur schnellen Formung eines von Kohlenstoff getragenen Metallkatalysators, gemischt mit Polytetrafluorethylen (Teflon) als polymeres Bindemittel, in flexible Platten durch anschließende Kalt- und Heißpressbehandlungen dieser Katalysator-Bindemittel-Mischung, wobei das Verfahren die folgenden Verarbeitungsschritte umfasst:
i. Mischen von Metallkatalysatorpulver, das den kohlenstoffbasierten Träger (1) enthält, mit dem als polymeres Bindemittelpulver (2) verwendeten Polytetrafluorethylen (Teflon) in trockenem Zustand bei einer hohen Mischgeschwindigkeit im Bereich zwischen 5000 und 10000 Umdrehungen (Drehungen) pro Minute für 30 und 90 Sekunden (3)
ii. Verteilen dieser homogenisierten Pulvermischung, die in Schritt i) hergestellt wurde, in der Form (4)
iii. Pressen (5) der Form (4) unter einem Druck von 0.5-2.0 Tonnen/Zoll² (7.722 - 30.888 MPa) bei Umgebungstemperatur für einen kurzen Zeitraum von 30-90 Sekunden
iv. Entfernen der kaltgepressten Platte (5) aus der Form, Abdeckung der kaltgepressten Platte (5) von beiden oberen und unteren ebenen Seiten mit einer Aluminiumfolie und Aussetzen dieser einem Hochtemperaturpressen (6) unter einem Druck von 0.5-2.0 Tonnen/Zoll² (7.722 - 30.888 MPa) bei 280-350°C für einen kurzen Zeitraum von 30-90 Sekunden
v. Nach dem Heißpressen (6) Entfernen der Katalysatorplatte (7) von der Aluminiumfolie.

2. Verfahren nach Anspruch 1, wobei der kohlenstoffbasierte Träger aus Aktivkohle, Holzkohle und Siliziumkarbid ausgewählt wird.

3. Verfahren nach Anspruch 1, wobei das Metallkatalysatorpulver als aktives Metall auf dem kohlenstoffbasierten Träger aus Platin, Palladium, Ruthenium, Rhodium, Nickel, Eisen ausgewählt ist.

4. Verfahren nach Anspruch 1, wobei das Gewichtsprozent des Metalls im Metallkatalysatorpulver, das den kohlenstoffbasierten Katalysatorträger enthält, 0-30% beträgt.

5. Verfahren nach Anspruch 1, wobei das Gewichtsprozent des Polytetrafluorethylens (Teflon) in der resultierenden Mischung aus Schritt (i) 40-80% beträgt.

## Revendications

1. Une méthode de mise en forme rapide d'un catalyseur métallique supporté par du carbone mélangé à du polytétrafluoroéthylène (Téflon) utilisé comme liant polymère en plaques flexibles par des traitements successifs de pressage à froid et à chaud de ce mélange catalyseur-liant, dans laquelle la méthode comprend les étapes de processus suivantes :
i. Mélanger la poudre de catalyseur métallique contenant le support à base de carbone (1) avec le polytétrafluoroéthylène (Téflon) utilisé comme poudre liante polymère (2) à l'état sec, à une vitesse de mélange élevée comprise entre 5000 et 10000 taux (tours) par minute pendant 30 et 90 secondes (3)
ii. Étendre ce mélange de poudre homogénéisé, préparé à l'étape i), dans le moule (4)
iii. Presser (5) le moule (4) sous une pression comprise entre 0.5-2.0 tonnes/pouce² (7.722 - 30.888 MPa), à température ambiante, pendant une courte période de 30-90 secondes
iv. Retirer la plaque pressée à froid (5) du moule, recouvrir la plaque pressée à froid (5) des deux côtés plans supérieur et inférieur d'une feuille d'aluminium et l'exposer à un pressage à haute température (6) sous une pression de 0.5-2.0 tonnes/pouce² (7.722 - 30.888 MPa), à une température de 280-350 °C pendant une courte période de 30-90 secondes
v. Après le pressage à chaud (6), retirer la plaque catalytique (7) de la feuille d'aluminium.

2. Une méthode selon la Revendication 1, dans laquelle le support à base de carbone est choisi parmi le charbon actif, le charbon et le carbure de silicium.

3. Une méthode selon la Revendication 1, dans laquelle la poudre de catalyseur métallique en tant que métal actif sur le support à base de carbone est choisie parmi le platine, le palladium, le ruthénium, le rhodium, le nickel, le fer.

4. Une méthode selon la Revendication 1, dans laquelle le pourcentage en poids de métal dans la poudre de catalyseur métallique contenant le support de catalyseur à base de carbone est compris entre 0-30 %.

5. Une méthode selon la Revendication 1, dans laquelle le pourcentage en poids du polytétrafluoroéthylène (Téflon) dans le mélange résultant de l'étape (i) est de 40-80%.
